# FASCICULE DE BREVET EUROPEEN

(11) **EP 0 532 443 B1**
(45) Date de publication et mention de la délivrance du brevet: **20.12.1995**
(21) Numéro de dépôt: 92440102.9
(22) Date de dépôt: 07.09.1992
(51) Int. Cl.: A01D 78/10

(54) **Machine de fenaison comportant des roulettes orientables**
Heuwerbungsmaschine mit verstellbaren Rädern
Haymaking machine with adjustable wheels

(30) Priorité: 10.09.1991 FR 9111294
(43) Date de publication de la demande: 17.03.1993
(73) Titulaire: KUHN S.A., F-67700 Saverne (FR)
(72) Inventeur: Quirin, Michel, F-67310 Allenwiller (FR)
(74) Mandataire: Andres, Jean-Claude

(56) Documents cités:
- EP-A- 0 131 530
- EP-A- 0 300 937
- EP-A- 0 439 067
- DE-A- 2 206 125
- DE-A- 4 021 812
- DE-U- 9 002 629
- FR-A- 2 631 208

## Description

La présente invention se rapporte à une machine de fenaison pouvant être accrochée à un tracteur, notamment une faneuse de végétaux coupés, comportant un bâti portant plusieurs rotors pouvant être entraînés en rotation autour d'axes porteurs dirigés de préférence obliquement de bas en haut et dans la direction d'avancement, sous chaque rotor étant disposée au moins une roulette porteuse qui est fixée sur une colonne reliée à un support qui est monté sur l'axe porteur correspondant, laquelle roulette peut être orientée autour dudit ce porteur dans au moins deux positions angulaires différentes par rapport au bâti qui porte les rotors. Une telle machine est connue dans la pratique.

Le fait de modifier l'orientation des roulettes permet de transposer la machine dans au moins deux positions de travail différentes. Dans l'une de ces positions, les roulettes forment des angles droits avec le bâti qui porte les rotors. Ceux-ci se situent alors sur une ligne qui est sensiblement perpendiculaire à la direction d'avancement et projettent les végétaux vers l'arrière de sorte qu'ils retombent sur la même bande de terrain et légèrement de part et d'autre de celle-ci. Dans l'autre de ces positions de travail, les roulettes forment des angles différents de 90° avec le bâti qui porte les rotors. Dans ce cas, ces derniers se situent sur une ligne oblique par rapport à la direction d'avancement. Ils projettent les végétaux en biais vers le côté de la machine qui est le plus en avant. Ceci permet notamment de déplacer les végétaux vers l'intérieur d'un terrain lorsqu'on travaille près de ses bords et d'éviter ainsi des pertes par projections au-delà des limites.

Sur des machines connues, l'orientation des roulettes s'effectue manuellement. Ce mode de réglage manuel nécessite une interruption du travail et le déplacement de l'utilisateur. Il occasionne ainsi des pertes de temps non-négligeables, notamment dans le cas de machines avec un grand nombre de rotors.

Sur la machine connue dans la demande de brevet EP 0 439 067 les axes porteurs des rotors comportent à leurs extrémités supérieures des leviers de réglage qui s'étendent vers l'extérieur du bâti et qui sont reliés entre-eux au moyen de tringles. De cette manière, il est possible d'orienter simultanément l'ensemble des roulettes. Cet agencement nécessite cependant que les axes porteurs soient pivotants par rapport au bâti. Il n'y a donc pas de liaison rigide entre ces pièces essentielles de la structure porteuse de la machine. Lesdits axes prennent rapidement trop de jeu dans leurs logements respectifs, ce qui entraîne des frais d'entretien et de remplacement élevés. En sus, dans le cas de machines avec des rotors latéraux repliables pour le transport, les tringles doivent comporter des articulations qui correspondent à celles du bâti. Ces articulations fragilisent tout le dispositif d'orientation des roulettes et lui font perdre peu à peu toute précision.

La présente invention a pour but de remédier à ces inconvénients. A cet effet, une importante caractéristique de l'invention consiste en ce que sous chaque rotor de la machine est disposé un moyen d'actionnement qui oriente la roulette correspondante, ce moyen d'actionnement comprenant un piston hydraulique logé dans un cylindre et des tuyaux permettant de relier ledit cylindre au circuit hydraulique du tracteur d'entraînement, ledit piston étant relié à une patte solidaire du support de la roulette correspondante par un élément intermédiaire et ledit cylindre étant lié rigidement à un plat d'une bague solidaire de l'axe porteur. Lorsque le piston est déplacé dans son cylindre, il fait tourner la roulette correspondante autour de l'axe porteur du rotor, en vue de son orientation dans la position recherchée. Durant ce déplacement ledit cylindre reste immobile par rapport à l'axe porteur du rotor correspondant. Le fait que les moyens d'actionnement qui orientent les roulettes se situent sous les rotors permet d'avoir des axes porteurs qui sont liés rigidement au bâti de la machine. On obtient ainsi une structure porteuse beaucoup plus résistante. Par ailleurs, la commande desdits moyens d'actionnement à partir du tracteur facilite les opérations à effectuer pour l'orientation des roulettes et permet de réaliser un important gain de temps.

Le piston hydraulique peut être à simple ou à double effet. Chaque piston hydraulique à simple effet coopère avec un ressort de rappel. Celui-ci assure d'une manière simple le retour de la roulette correspondante dans la première position de travail.

Selon une autre caractéristique de l'invention, il est prévu sous chaque rotor un dispositif de verrouillage automatique de la roulette correspondante. Ce dispositif évite tout changement de position non voulu et qui serait par exemple dû à des obstacles se trouvant au sol ou au ripage de la machine sur un terrain en pente. Dans ce cas, la tige du piston hydraulique comporte avantageusement un moyen pour le déverrouillage automatique de la roulette correspondante.

D'autres caractéristiques et avantages de l'invention ressortiront des revendications et de la description ci-après de plusieurs exemples de réalisation non limitatifs de l'invention, avec référence aux dessins annexés dans lesquels :
- la figure 1 représente une vue de dessus d'une machine selon l'invention dans une première position de travail,
- la figure 2 représente une vue de dessus d'une machine selon l'invention dans une deuxième position de travail,
- la figure 3 représente une coupe d'un rotor suivant un plan vertical,
- la figure 4 représente une coupe suivant un plan horizontal, d'un exemple de réalisation des moyens d'actionnement des roulettes,
- la figure 5 représente une coupe similaire à celle de la figure 4, la roulette occupant une autre position,
- la figure 6 représente une coupe suivant un plan horizontal, d'un autre exemple de réalisation des moyens d'actionnement des roulettes,
- la figure 7 représente une coupe similaire à celle de la figure 6, la roulette occupant une autre position,
- la figure 8 représente une coupe suivant un plan horizontal, d'un autre exemple de réalisation des moyens d'actionnement des roulettes,
- la figure 9 représente une coupe similaire à celle de la figure 8, la roulette occupant une autre position.

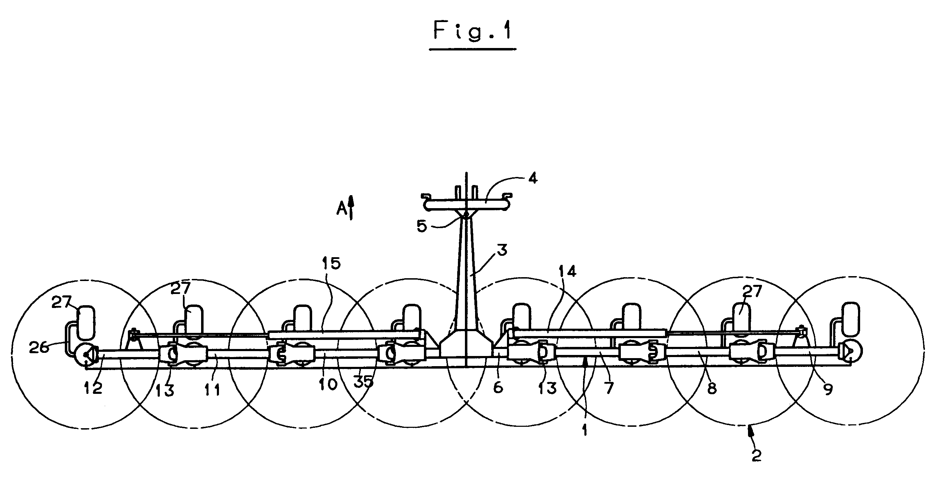

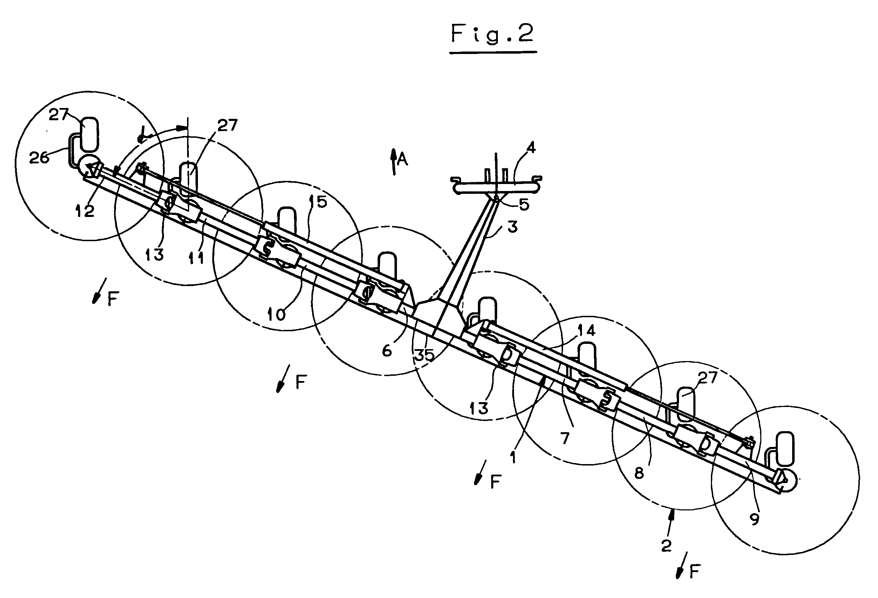

Telle qu'elle est représentée sur les figures 1 et 2, la machine selon l'invention comporte un bâti (1) portant plusieurs rotors (2). Ledit bâti (1) peut être accouplé à un tracteur d'entraînement non représenté. A cet effet, il possède une poutre (3) sur laquelle est articulé un dispositif d'accouplement (4). Cette articulation est réalisée au moyen d'un axe sensiblement vertical (5). Le bâti (1) se compose par ailleurs d'un tronçon central (6) et de six tronçons latéraux (7 à 12) dont trois se situent d'un côté dudit tronçon central et trois de l'autre côté. Le tronçon central (6) est relié à la poutre (3). Il comporte deux rotors (2). Chaque tronçon latéral (7 à 12) porte un seul rotor (2). Ces différents tronçons (6 à 12) sont articulés entre eux au moyen d'articulations (13) comportant des axes qui sont sensiblement horizontaux et dirigés perpendiculairement auxdits tronçons. Le bâti (1) comporte aussi deux vérins hydrauliques (14 et 15) pour le repliage des tronçons latéraux (7 à 12) autour de leurs articulations (13). Ils peuvent ainsi être transposés dans une position de transport dans laquelle la largeur de la machine est réduite.

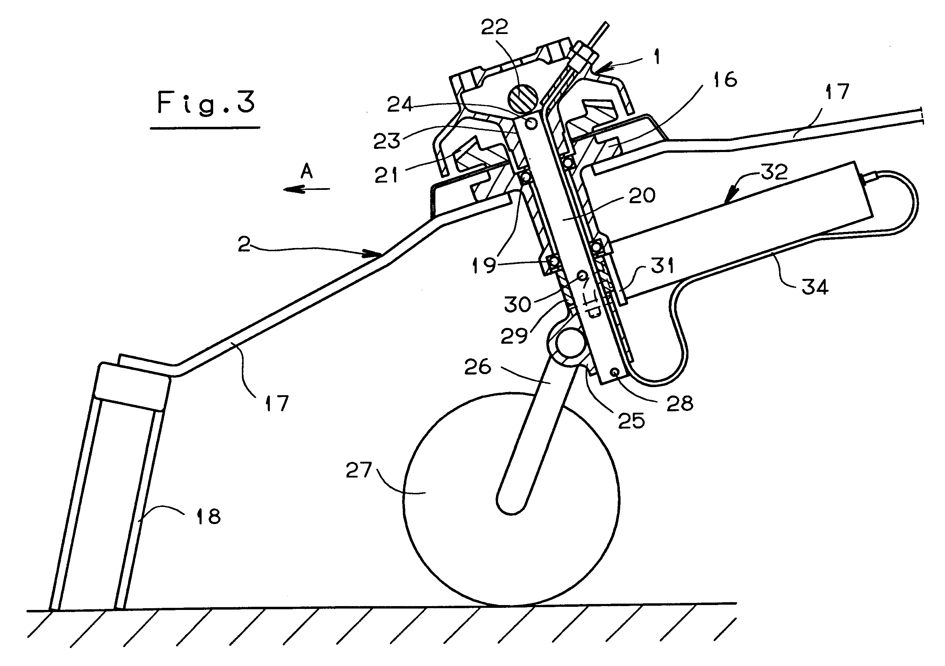

Il ressort notamment de la figure 3, que chaque rotor (2) est constitué par un moyeu (16) sur lequel sont fixés plusieurs bras (17) portant des fourches de travail (18) à leurs extrémités libres. Ledit moyeu (16) est monté au moyen de roulements à billes (19) sur un axe porteur (20). Celui-ci est légèrement incliné dans la direction d'avancement (A). Le moyeu (16) porte également une couronne (21) servant à l'entraîner en rotation autour de l'axe porteur (20). Cet entraînement est assuré à partir de l'arbre de prise de force du tracteur. A cet effet, il est prévu dans chaque tronçon (6 à 12) du bâti (1) un arbre de transmission (22) muni d'un pignon qui engrène avec la couronne (21) du rotor (2) correspondant. Ces différents arbres de transmission (22) sont articulés entre eux et sont reliés audit arbre de prise de force au moyen d'un arbre intermédiaire qui se situe sous la poutre (3).

L'axe porteur (20) de chaque rotor (2) est logé, avec son extrémité supérieure, dans un alésage (23) du bâti (1) et est fixé rigidement à ce dernier par une goupille (24). Sur l'extrémité inférieure de chaque axe porteur (20) est monté un support (25) d'une colonne (26), qui porte une roulette (27). Ce support (25) est monté sur l'axe (20) de manière à être mobile en rotation, mais fixe en translation. Vers le bas, il est arrêté par une goupille (28). Entre ledit support (25) et le moyeu (16) correspondant, l'axe (20) porte en sus une bague (29). Celle-ci est rendue solidaire dudit axe (20) à l'aide d'une goupille (30). Cette bague empêche ainsi tout déplacement vers le haut du support (25).

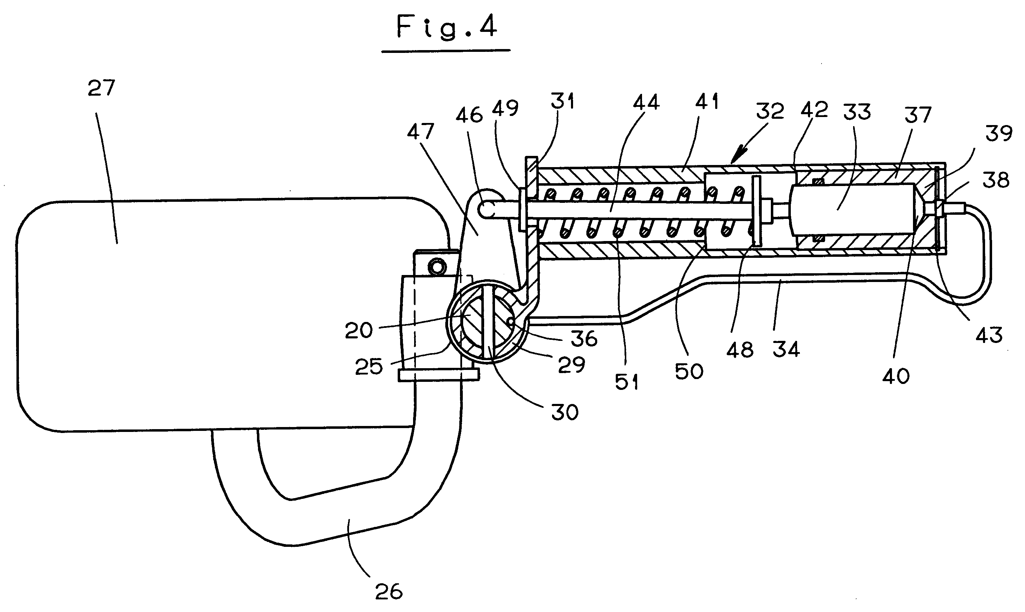

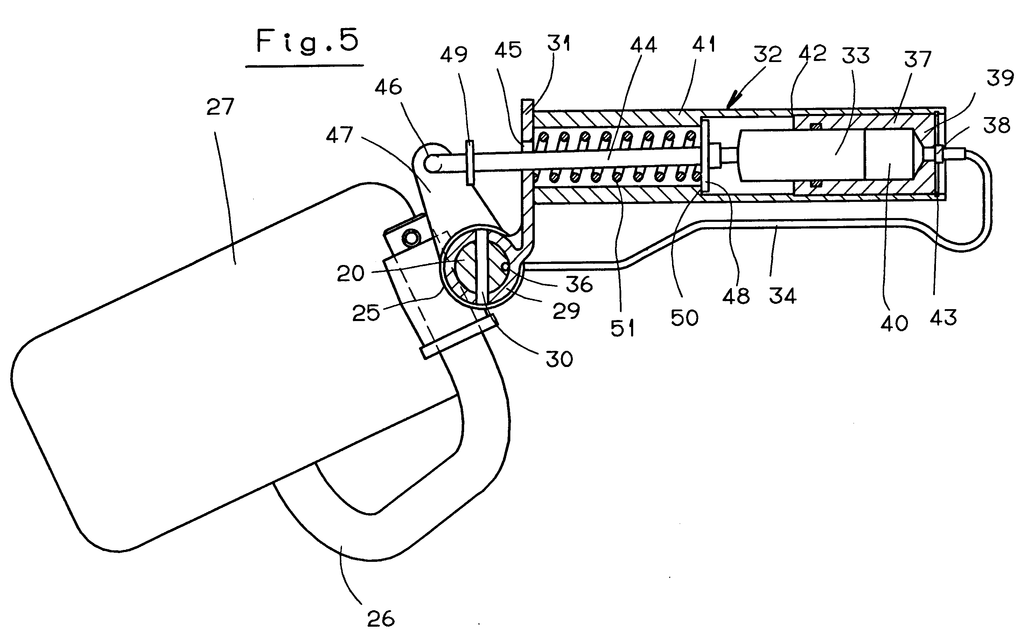

Tel que cela ressort notamment des figures 4 et 5, la bague (29) comporte un plat (31). Celui-ci sert de support à un moyen d'actionnement (32) destiné à orienter la roulette (27) autour de l'axe porteur (20) correspondant. Dans l'exemple des figures 3 à 5, ledit moyen d'actionnement (32) est constitué par un piston hydraulique (33) qui est relié au circuit hydraulique du tracteur d'entraînement au moyen d'un tuyau (34). Ce dernier traverse le rotor (2) correspondant et rejoint un tuyau d'alimentation générale (35), qui se situe au-dessus des rotors (2) et qui peut être branché sur une prise hydraulique du tracteur. L'axe porteur (20) de chaque rotor (2) comporte une gorge longitudinale (36) par laquelle passe le tuyau (34).

Chaque piston (33) est logé dans un cylindre (37) comparable au corps d'un vérin hydraulique. Le tuyau (34) est relié à un raccord (38) prévu sur la face arrière (39) dudit cylindre. A travers ce raccord (38) il communique avec le volume intérieur (40) du cylindre (37). Ce dernier est logé dans un tube support (41). Il est bloqué dans ce tube (41) au moyen d'un épaulement (42) et d'un circlips (43). Le tube (41) est lui-même soudé sur le plat (31) de la bague (29).

A l'avant du piston (33) est disposée une tige (44) qui se situe partiellement dans le tube (41) et partiellement en-dehors de celui-ci. Le plat (31) possède un orifice (45) pour permettre le passage de ladite tige (44). Son extrémité qui est située à l'extérieur du tube (41) est coudée vers le bas et est accrochée dans un trou (46) d'une patte (47) qui est solidaire du support (25) de la colonne (26). Ce trou (46) est excentré par rapport à l'axe porteur (20). La tige (44) comporte par ailleurs deux butées (48 et 49) pour limiter ses déplacements et par conséquent les déplacements du piston (33) et de la roulette (27) correspondants. La butée (48) coopère avec un épaulement (50) du tube (41) formant un arrêt. L'autre butée (49) coopère avec le plat (31). A l'intérieur du tube (41) est en sus prévu un ressort de rappel (51) dont la pression est opposée, mais inférieure à celle du piston (33) lorsqu'il est actionné. Ce ressort (51) entoure la tige (44) sur sa partie située entre le plat (31) et sa butée (48).

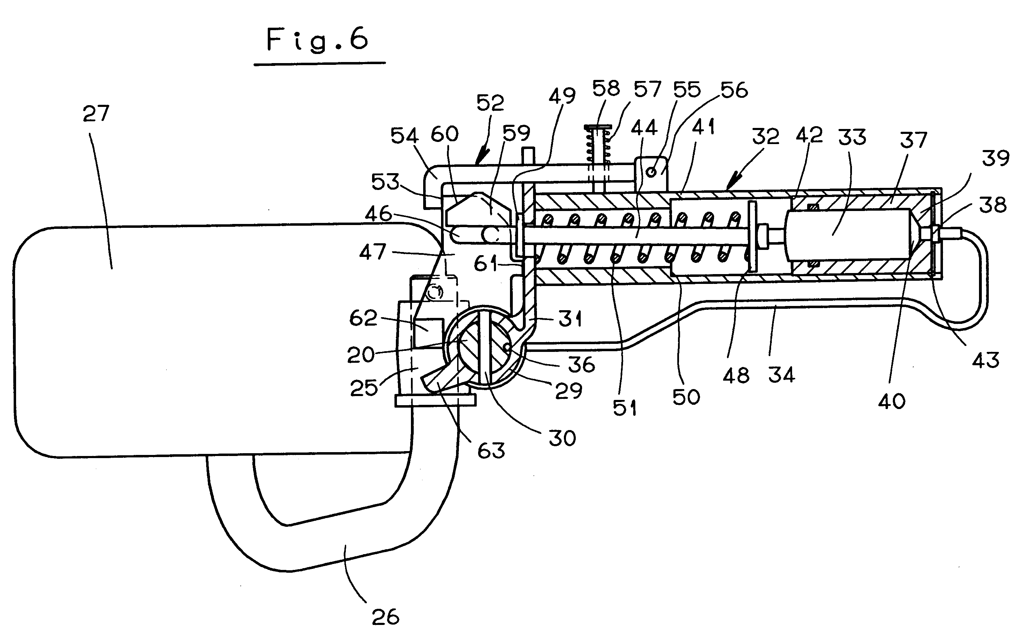

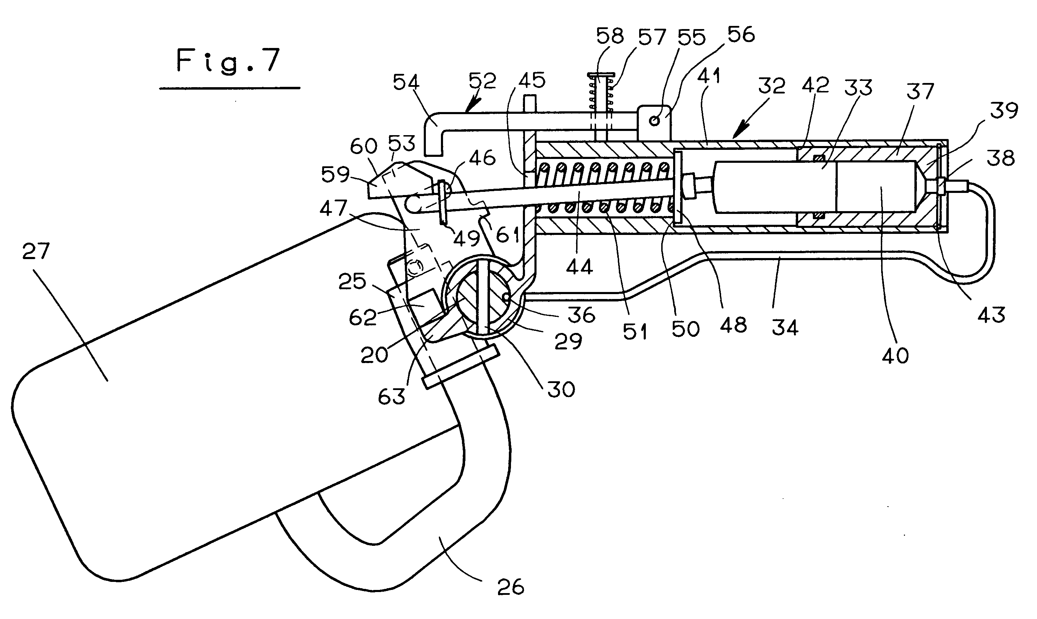

L'exemple de réalisation selon les figures 6 et 7 est pratiquement identique à l'exemple précédent, mais comporte en plus des moyens de verrouillage automatique (52) de la roulette (27) correspondante dans la première position de travail. Ces moyens se composent d'un cran (53) prévu sur la patte (47) et d'un verrou coudé (54). Ce dernier est articulé avec un axe (55) sur deux pattes (56) solidaires du tube (41). Il est constamment poussé vers le plat (31) et ledit tube par un ressort (57). Celui-ci est engagé sur une tige (58) qui traverse le verrou (54) et qui est fixée sur le tube (41). Le cran (53) se situe à l'extrémité de la patte (47). Il a une forme similaire à celle de la partie coudée du verrou (54). Ainsi, lorsque le cran (53) se situe dans ladite partie coudée du verrou (54), celui-ci bloque la patte (47) et par conséquent la roulette (27) par rapport à l'axe porteur (20). Dans ce mode de réalisation le trou d'accrochage (46) de la tige (44) sur la patte (47) a une forme oblongue. Ladite tige comporte en sus un bossage (59) qui s'étend au-dessus de la patte (47) jusque dans la zone où se situe la partie recourbée du verrou (54). Ce bossage (59) comporte au moins une face inclinée (60) qui dépasse le cran (53) latéralement en direction du verrou (54). La longueur de cette face (60) correspond sensiblement à celle du trou oblong (46). De plus, vue dans le sens d'avancement (A), elle se situe plus en avant que la partie recourbée de la tige (44), mais derrière la partie recourbée du verrou (54) lorsque celle-ci bloque la patte (47) (voir figure 6). Cette patte (47) comporte elle-même deux butées (61 et 62). La butée (61) est dirigée vers le plat (31) de la bague (29) et s'appuie contre celui-ci dans la première position de la roulette (27). L'autre butée (62) se situe sur la face supérieure de la patte (47), près du bord d'attache au support (25). Dans la seconde position de la roulette (27), elle coopère avec un arrêt (63) qui est solidaire de la bague (29) et qui s'étend latéralement à celle-ci.

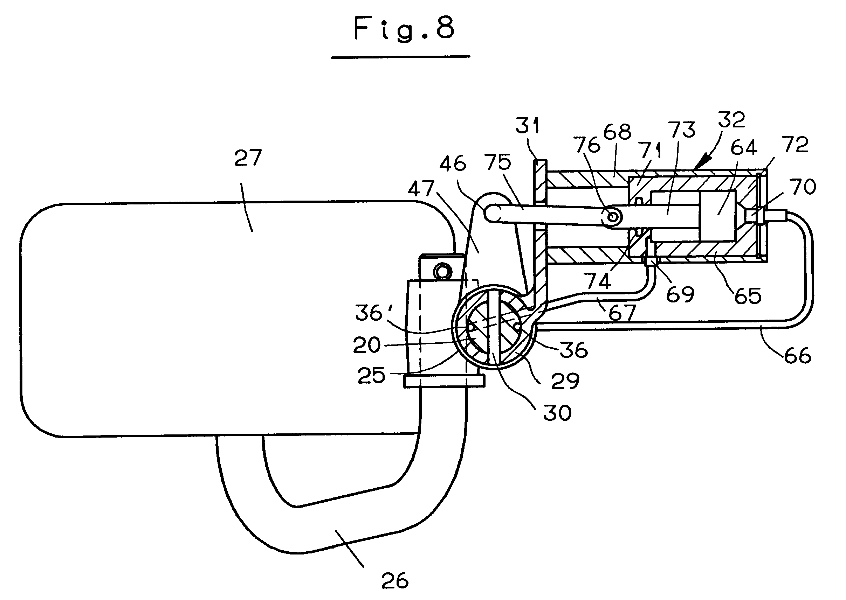

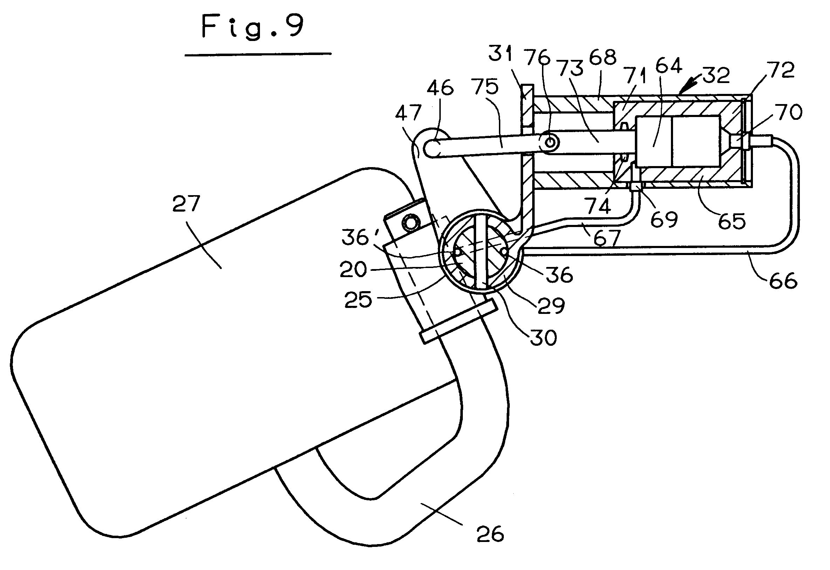

Dans le mode de réalisation selon les figures 8 et 9, le moyen d'actionnement (32) est notamment constitué par un piston (64) à double effet. Celui-ci est logé dans un cylindre (65) qui est relié au circuit hydraulique du tracteur d'entraînement au moyen de deux tuyaux (66 et 67). Dans ce cas, l'axe porteur (20) peut comporter deux gorges longitudinales (36 et 36′) pour le passage desdits tuyaux par le rotor (2). Le cylindre (65) est lui-même logé, comme dans les exemples de réalisation décrits précédemment, dans un tube (68) qui est solidaire du plat (31) de la bague (29). Sur ce cylindre (65) sont prévus deux raccords (69 et 70) pour les tuyaux (66 et 67). Chaque raccord se situe près d'une des extrémités (71 et 72) du cylindre (65), de sorte que les arrivées d'huile se trouvent sur les deux côtés du piston (64). Ce dernier comporte un bras (73) qui s'étend hors du cylindre (65). L'orifice par lequel passe ce bras (73) est muni d'un joint d'étanchéité (74) pour éviter les fuites d'huile. Sur le bras (73) est articulée une tige (75) au moyen d'un axe (76) qui est sensiblement parallèle à l'axe porteur (20). Cette tige (75) s'étend à travers le plat (31) de la bague (29) et est accrochée dans un trou (46) de la patte (47) du support (25). Ledit trou (46) est excentré par rapport à l'axe porteur (20).

Durant le travail, la machine est accouplée à un tracteur qui permet de la déplacer dans la direction (A). Dans la première position qui est représentée sur la figure 1, ses rotors (2) se situent sur une ligne sensiblement perpendiculaire au sens d'avancement. Ils sont entraînés en rotation, autour de leurs axes porteurs respectifs, de telle sorte qu'ils tournent deux à deux en convergence à l'avant. Leurs fourches (18) ramassent alors les végétaux qui se trouvent au sol, les déplacent vers l'arrière et les étalent à nouveau sur pratiquement la même bande de terrain, tout en provoquant leur retournement. Les différents rotors (2) peuvent suivre les dénivellations du sol en pivotant avec leurs tronçons (6 à 12) autour des articulations (13) de ces derniers.

Dans cette première position de travail, vues de dessus, les roulettes (27) sont sensiblement perpendiculaires au bâti (1) qui porte les rotors (2). Dans l'exemple de réalisation selon les figures 4 et 5, chaque piston (33) est alors totalement rentré dans le cylindre (37), la pression hydraulique dans celui-ci étant quasiment nulle. Chaque ressort (51) pousse sur la butée (48) de la tige (44) correspondante et maintient celle-ci de telle sorte que sa seconde butée (49) soit en contact avec le plat (31). Les ressorts (51) retiennent ainsi les roulettes (27) à travers les tiges (44) et les supports (25) dans la première position de travail (voir figure 4).

Dans l'exemple de réalisation qui est illustré sur les figures 6 et 7, les pistons (33) sont également entièrement rentrés dans les cylindres (37), dans la première position de travail. Les tiges (44) sont ramenées vers l'intérieur des tubes (41) par les ressorts (51). Elles tirent alors sur les pattes (47) des supports (25), de telle sorte que leurs butées (61) respectives soient plaquées contre les plats (31). D'autre part, dans cette position, les verrous (54) sont engagés sur les crans (53) des pattes (47) et bloquent ces dernières. Ils évitent ainsi que les roulettes (27) ne pivotent autour de leurs axes porteurs (20) respectifs par exemple lorsqu'elles rencontrent des obstacles qui peuvent provoquer de brusques poussées latérales.

Dans l'exemple de réalisation des figures 8 et 9, chaque piston (64) est en butée contre l'extrémité (72) du cylindre (65). Il est bloqué dans cette position par l'huile qui est présente dans l'espace situé entre le piston (64) et l'extrémité (71) du cylindre (65) (voir figure 8). De ce fait, les pistons (64) et leurs bras (73) respectifs bloquent les roulettes (27), par l'intermédiaire des tiges (75) et des pattes (47) qui sont solidaires des supports (25), dans la première position de travail.

Selon l'invention, la machine peut être transposée dans la deuxième position de travail qui est représentée sur la figure 2, à partir du tracteur. A cet effet, le dispositif hydraulique du tracteur est commandé afin qu'il actionne les moyens de manoeuvre (32), de telle sorte qu'ils fassent pivoter les roulettes (27) autour des axes porteurs (20), jusqu'à ce qu'elles forment en vue de dessus des angles (α) d'environ 60° avec le bâti (1). Lorsque la machine est déplacée dans la direction (A), ces roulettes s'orientent automatiquement dans cette direction. Par conséquent, elles font tourner le bâti (1) avec les rotors (2) autour de l'axe d'articulation (5) avec le dispositif d'accouplement (4). Lesdits rotors (2) se situent alors sur une ligne oblique par rapport à la direction d'avancement (A). Ils déplacent ainsi les végétaux en biais dans le sens des flèches (F).

Dans l'exemple de réalisation selon les figures 4 et 5, le pivotement des roulettes (27) est obtenu par le déplacement des pistons (33) dans les cylindres (37). Ce déplacement est réalisé au moyen d'une certaine quantité d'huile envoyée dans le volume (40) de ces cylindres (37) à partir du tracteur. Lesdits pistons (33) poussent alors les tiges (44) vers l'extérieur des tubes (41) jusqu'à ce que leurs butées (48) respectives se bloquent contre les épaulements (50). Simultanément, ces tiges (44) poussent sur les pattes (47) des supports (25), de sorte que ceux-ci pivotent avec les roulettes (27) autour des axes porteurs (20) dans la position inclinée par rapport au bâti (1). Dans cette position, les ressorts (51) sont comprimés. L'huile qui est dans les cylindres (37) bloque alors les pistons (33) et les tiges (44), de sorte que les roulettes (27) conservent leur position durant le travail.

Dans l'exemple de réalisation selon les figures 6 et 7, les pistons (33) sont également déplacés vers l'extérieur par rapport aux cylindres (37) par l'huile envoyée à travers les tuyaux (34 et 35) depuis le tracteur. Ils poussent alors les tiges (44) vers l'extérieur des tubes (41). Dans un premier temps, lesdites tiges (44) se déplacent dans les trous oblongs (46) des pattes (47). Les faces inclinées (60) des bossages (59) repoussent alors les verrous (54), à l'encontre de la pression de leurs ressorts (57), jusqu'à ce qu'ils ne soient plus en contact avec les crans (53) des pattes (47). A ce moment, les tiges (44) arrivent dans les extrémités desdits trous oblongs (46) et font pivoter les pattes (47) et les supports (25) avec les roulettes (27) autour des axes porteurs (20). Ce pivotement a lieu jusqu'à ce que les butées (62) des pattes (47) arrivent en contact avec les arrêts (63) des bagues (29). Simultanément, les butées (48) des tiges (44) rencontrent les épaulements (50) et arrêtent les pistons (33). Ceux-ci maintiennent alors les roulettes (27) dans la nouvelle position durant le travail (voir figure 7).

Dans l'exemple de réalisation des figures 8 et 9, la deuxième position de travail est également obtenue par le déplacement des pistons (64) en direction des extrémités (71) des cylindres (65), au moyen d'huile envoyée depuis le tracteur par les tuyaux (66). Simultanément, l'huile qui se trouve de l'autre côté des pistons (64) est chassée en direction du tracteur par les tuyaux (67). Ces pistons déplacent alors, par l'intermédiaire des bras (73) et des tiges (75), les pattes (47) et les supports (25) avec les roulettes (27) autour des axes porteurs (20). Ces pièces sont bloquées dans la deuxième position de travail aussi longtemps que l'huile demeure ainsi dans le cylindre (65).

Le retour de la machine dans la première position de travail se commande également à partir du tracteur. En ce qui concerne les deux exemples de réalisation selon les figures 4 à 7, il suffit de faire revenir l'huile qui se trouve dans les cylindres (37) vers le tracteur. Les ressorts (51) repoussent alors les pistons (33) et les tiges (44). Ces dernières ramènent ainsi les roulettes (27) par l'intermédiaire des pattes (47) et des supports (25) dans leur première position. En raison du déplacement de la machine dans la direction (A), le bâti (1) qui porte les rotors (2) pivote autour de l'axe d'articulation (5) et revient dans sa première position. En sus, dans l'exemple des figures 6 et 7, les verrous (54) bloquent à nouveau automatiquement les pattes (47) et les roulettes (27).

Dans l'exemple de réalisation conforme aux figures 8 et 9, le retour dans la première position de travail est obtenu en libérant l'huile qui se situe du côté de l'extrémité (72) des cylindres (65) et en envoyant une certaine quantité d'huile dans le volume situé entre les pistons (64) et l'extrémité opposée (71) des cylindres (65). Les pistons (64) qui sont alors repoussés entraînent les tiges (75) qui font pivoter les pattes (47) et les supports (25) avec les roulettes (27) dans la première position. Le bâti (1) revient alors automatiquement dans la première position de travail en raison du déplacement de la machine dans la direction (A).

Il est bien évident que l'invention n'est pas limitée aux modes de réalisation décrits et représentés sur les dessins annexés. Des modifications restent possibles, notamment en ce qui concerne la constitution des divers éléments ou par substitution d'équivalents techniques, sans sortir pour autant du domaine de protection tel que défini dans les revendications.

## Revendications

1. Machine de fenaison pouvant être accrochée à un tracteur, notamment une faneuse de végétaux coupés, comportant un bâti (1) portant plusieurs rotors (2) pouvant être entraînés en rotation autour d'axes porteurs (20) dirigés de préférence obliquement de bas en haut et dans la direction d'avancement (A), sous chaque rotor (2) étant disposée au moins une roulette porteuse (27) qui est fixée sur une colonne (26) reliée à un support (25) qui est monté sur l'axe porteur (20) correspondant, laquelle roulette (27) peut être orientée autour dudit axe (20) dans au moins deux positions angulaires différentes par rapport au bâti (1) qui porte les rotors (2), caractérisée par le fait que sous chaque rotor (2) est disposé un moyen d'actionnement (32) qui oriente la roulette (27) correspondante, ce moyen d'actionnement (32) comprenant un piston hydraulique (33, 64) logé dans un cylindre (37, 65) et des tuyaux (34, 35 ; 66, 67) permettant de relier ledit cylindre au circuit hydraulique du tracteur d'entraînement, ledit piston (33, 64) étant relié à une patte (47) solidaire du support (25) de la roulette (27) correspondante par un élément intermédiaire (44, 75) et ledit cylindre (37,65) étant lié rigidement à un plat (31) d'une bague (29) solidaire de l'axe porteur (20).

2. Machine selon la revendication 1, caractérisée par le fait que chaque cylindre (37, 65) est monté de manière immobile dans un support (41, 68) qui est fixé sur le plat (31).

3. Machine selon la revendication 1 ou 2, caractérisée par le fait qu'à chaque cylindre (37) est raccordé un tuyau hydraulique (34) qui communique avec son volume intérieur (40) et qui traverse le rotor (2) correspondant.

4. Machine selon la revendication 1 ou 2, caractérisée par le fait qu'à chaque cylindre (65) sont raccordés deux tuyaux hydrauliques (66 et 67) qui communiquent avec son volume intérieur à des endroits situés près de ses deux extrémités (71 et 72), lesquels tuyaux traversent le rotor (2) correspondant.

5. Machine selon la revendication 3 ou 4, caractérisée par le fait que l'axe porteur (20) de chaque rotor (2) comporte au moins une gorge longitudinale (36, 36') pour le ou les tuyaux (34, 66, 67).

6. Machine selon l'une quelconque des revendications précédentes, caractérisée par le fait que chaque piston (33, 64) coopère avec une tige (44, 75) qui est accrochée dans un trou (46) de la patte (47) solidaire du support (25) de la roulette (27) correspondante, lequel trou est excentré par rapport à l'axe porteur (20).

7. Machine selon la revendication 6, caractérisée par le fait que chaque piston (33) coopère avec un ressort de rappel (51).

8. Machine selon la revendication 7, caractérisée par le fait que le ressort de rappel (51) est logé dans le même support (41) que le piston (33) correspondant.

9. Machine selon l'une quelconque des revendications 6 à 8, caractérisée par le fait que chaque tige (44) comporte des butées (48, 49) pour limiter ses déplacements.

10. Machine selon l'une quelconque des revendications précédentes, caractérisée par le fait que sous chaque rotor (2) sont disposés des moyens de verrouillage automatique (52) de la roulette (27) correspondante.

11. Machine selon la revendication 10, caractérisée par le fait que les moyens de verrouillage automatique (52) se composent notamment d'un verrou à ressort (54) et d'un cran (53) prévu sur la patte (47) du support (25) de la roulette (27) correspondante.

12. Machine selon la revendication 11, caractérisée par le fait que le verrou (54) est articulé sur le tube support (41) correspondant.

13. Machine selon l'une quelconque des revendications 10 à 12, caractérisée par le fait que chaque tige (44) comporte un bossage (59) pour le déverrouillage automatique de la roulette (27) correspondante.

14. Machine selon la revendication 13, caractérisée par le fait que chaque bossage (59) comporte une face inclinée (60) qui coopère avec le verrou (54) en vue du déverrouillage de la roulette (27) correspondante.

15. Machine selon l'une quelconque des revendications précédentes, caractérisée par le fait que le support (25) de chaque roulette (27) comporte des butées (61 et 62) qui coopèrent avec des arrêts (31, 63) pour limiter les déplacements de ladite roulette.

16. Machine selon la revendication 15, caractérisée par le fait que les arrêts (31, 63) sont solidaires de la bague (29) qui est fixée sur l'axe porteur (20) correspondant.

## Claims

1. A haymaking machine able to be hitched to a tractor, in particular a tedder for cut plants, comprising a flame (1) carrying several rotors (2) able to be driven in rotation about supporting axes (20) directed for preference obliquely from below to above and in the direction of advance (A), there being arranged under each rotor (2) at least one supporting wheel (27) which is fixed onto a column (26) connected to a support (25) which is mounted on the corresponding supporting axis (20), this wheel (27) being able to be directed about the said axis (20) in at least two different angular positions in relation to the flame (1) which carries the rotors (2), ***characterised in that*** under each rotor (2) is arranged an activating means (32) which directs the corresponding wheel (27), this activating means (32) comprising a hydraulic piston (33, 64) housed in a cylinder (37, 65) and pipes (34, 35; 66, 67) permitting the connection of the said cylinder to the hydraulic circuit of the drive tractor, the said piston (33, 64) being connected to a foot (47) solidly attached to the support (25) of the corresponding wheel (27) by an intermediate element (44, 75) and the said cylinder (37, 65) being rigidly connected to a plate (31) of a coller (29) solidly fixed to the supporting axis (20).

2. A machine in accordance with claim 1, ***characterised in that*** each cylinder (37, 65) is assembled in a fixed manner in a support (41, 68) which is fixed onto the plate (31).

3. A machine in accordance with claim 1 or 2, ***characterised in that*** to each cylinder (37) is connected a hydraulic pipe (34) which communicates with its interior volume (40) and which passes through the corresponding rotor (2).

4. A machine in accordance with claim 1 or 2, ***characterised in that*** to each cylinder (65) are connected two hydraulic pipes (66 and 67) which communicate with its interior volume at places situated close to its two ends (71 and 72), these pipes passing through the corresponding rotor (2).

5. A machine in accordance with claim 3 or 4, ***characterised in that*** the supporting axis (20) of each rotor (2) has at least one longitudinal groove (36, 36') for the pipe or pipes (34, 66, 67).

6. A machine in accordance with any one of the preceding claims, ***characterised in that*** each piston (33, 64) cooperates with a rod (44, 75) which is hitched in a hole (46) of the foot (47) solidly attached to the support (25) of the corresponding wheel (27), this hole being offset in relation to the supporting axis (20).

7. A machine in accordance with claim 6, ***characterised in that*** each piston (33) cooperates with a return spring (51).

8. A machine in accordance with claim 7, ***characterised in that*** the return spring (51) is housed in the same support (41) as the corresponding piston (33).

9. A machine in accordance with any one of claims 6 to 8, ***characterised in that*** each rod (44) has stops (48, 49) to limit its displacements.

10. A machine in accordance with any one of the preceding claims, ***characterised in that*** under each rotor (2) are arranged automatic locking means (52) for the corresponding wheel (27).

11. A machine in accordance with claim 10, ***characterised in that*** the automatic locking means (52) are composed in particular of a spring bolt (54) and a catch (53) provided on the foot (47) of the support (25) of the corresponding wheel (27).

12. A machine in accordance with claim 11, ***characterised in that*** the bolt (54) is articulated on the corresponding support tube (41).

13. A machine in accordance with any one of claims 10 to 12, ***characterised in that*** each rod (44) has a projection (59) for the automatic unlocking of the corresponding wheel (27).

14. A machine in accordance with claim 13, *c**haracterised in that*** each projection (59) has an inclined face (60) which cooperates with the bolt (54) with a view to the unlocking of the corresponding wheel (27).

15. A machine in accordance with any one of the preceding claims, ***characterised in that*** the support (25) of each wheel (27) has stops (61 and 62) which cooperate with stops (31, 63) to limit the displacements of the said wheel.

16. A machine in accordance with claim 15, ***characterised in that*** the stops (31, 63) are solidly attached to the coller (29) which is fixed onto the corresponding supporting axis (20).

## Patentansprüche

1. Heuwerbungsmaschine, die an einen Traktor angehängt werden kann, insbesondere eine Wendemaschine für geschnittenes Pflanzengut, und die einen Rahmen (1) aufweist, der mehrere Rotoren (2) trägt, die um vorzugsweise schräg von unten nach oben und in Fahrtrichtung (A) gerichtete Trägerachsen (20) in Drehung versetzt werden können, wobei unter jedem Rotor (2) zumindest ein Stützrad (27) angeordnet ist, das auf einer Säule (26) befestigt ist, die mit einem Träger (25) verbunden ist, der auf der entsprechenden Trägerachse (20) angeordnet ist, welches Rad (27) um diese Achse (20) in mindestens zwei in bezug auf den Rahmen (1), der die Rotoren (2) trägt, verschiedenen Winkellagen eingestellt werden kann, dadurch gekennzeichnet, daß unter jedem Rotor (2) ein Betätigungsmittel (32) angeordnet ist, das das entsprechende Rad (27) einstellt, welches Betätigungsmittel (32) einen Hydraulikkolben (33, 64), der in einem Zylinder (37, 65) angordnet ist, und Schläuche (34, 35; 66, 67), die diesen Zylinder mit dem Hydraulikkreis des Antriebstraktors zu verbinden gestatten, umfaßt, wobei dieser Hydraulikkolben (33, 64) mit einer Lasche (47), die fest auf dem Träger (25) des entsprechenden Rades (27) angeordnet ist, durch ein Zwischenelement (44, 75) verbunden ist und dieser Zylinder (37, 65) fest mit einer Platte (31) einer fest auf der Trägerachse (20) angeordneten Buchse (29) verbunden ist.

2. Maschine nach Anspruch 1, dadurch gekennzeichnet, daß jeder Zylinder (37, 65) unverschiebbar in einem Träger (41, 68), der auf der Platte (31) befestigt ist, montiert ist.

3. Maschine nach Anspruch 1 oder 2, dadurch gekennzeichnet, daß an jedem Zylinder (37) ein Hydraulikschlauch (34) angeschlossen ist, der mit dessen Innenraum (40) kommuniziert und der den entsprechenden Rotor (2) durchsetzt.

4. Maschine nach Anspruch 1 oder 2, dadurch gekennzeichnet, daß an jedem Zylinder (65) zwei Hydraulikschläuche (66 und 67) angeschlossen sind, die mit dessen Innenraum in Bereichen, die nahe an dessen zwei Enden (71 und 72) liegen, kommunizieren, wobei die Schläuche den entsprechenden Rotor (2) durchsetzen.

5. Maschine nach Anspruch 3 oder 4, dadurch gekennzeichnet, daß die Trägerachse (20) jedes Rotors (2) zumindest eine Längsrille (36, 36') für den oder die Schläuche (34, 66, 67) aufweist.

6. Maschine nach irgendeinem der vorhergehenden Ansprüche, dadurch gekennzeichnet, daß jeder Kolben (33, 64) mit einer Stange (44, 75) zusammenarbeitet, die in einem Loch (46) der fest mit dem Träger (25) des entsprechenden Rades (27) verbundenen Lasche (47) angehängt ist, welches Loch exzentrisch in bezug auf die Trägerachse (20) ist.

7. Maschine nach Anspruch 6, dadurch gekennzeichnet, daß jeder Kolben (33) mit einer Rückzugfeder (51) zusammenarbeitet.

8. Maschine nach Anspruch 7, dadurch gekennzeichnet, daß die Rückzugfeder (51) im selben Träger (41) angeordnet ist wie der entsprechende Kolben (33).

9. Maschine nach irgendeinem der Ansprüche 6 bis 8, dadurch gekennzeichnet, daß jede Stange (44) Anschläge (48, 49) aufweist, um ihre Verstellungen zu begrenzen.

10. Maschine nach irgendeinem der vorhergehenden Ansprüche, dadurch gekennzeichnet, daß unter jedem Rotor (2) automatische Verriegelungsmittel (52) für das entsprechende Rad (27) angeordnet sind.

11. Maschine nach Anspruch 10, dadurch gekennzeichnet, daß die automatischen Verriegelungsmittel (52) insbesondere aus einem Riegel mit Feder (54) und einer Raste (53) besteht, die auf der Lasche (47) des Trägers (25) des entsprechenden Rades (27) vorgesehen ist.

12. Maschine nach Anspruch 11, dadurch gekennzeichnet, daß der Riegel (54) auf dem entsprechenden Trägerrohr (41) angelenkt ist.

13. Maschine nach irgendeinem der Ansprüche 10 bis 12, dadurch gekennzeichnet, daß jede Stange (44) eine Nocke (59) zur automatischen Entriegelung des entsprechenden Rades (27) aufweist.

14. Maschine nach Anspruch 13, dadurch gekennzeichnet, daß jede Nocke (59) eine Schrägfläche (60) aufweist, die mit dem Riegel (54) hinsichtlich der Entriegelung des entsprechenden Rades (27) zusammenarbeitet.

15. Maschine nach irgendeinem der vorhergehenden Ansprüche, dadurch gekennzeichnet, daß der Träger (25) jedes Rades (27) Anschläge (61 und 62) aufweist, die mit Anhaltvorrichtungen (31, 63) zusammenarbeiten, um die Verstellung des Rades zu begrenzen.

16. Maschine nach Anspruch 15, dadurch gekennzeichnet, daß die Anhaltvorrichtungen (31, 63) fest an der Buchse (29) angebracht sind, die auf der entsprechenden Trägerachse (20) befestigt ist.
